# EUROPEAN PATENT APPLICATION

(11) **EP 2 741 428 A1**
(43) Date of publication of application: **11.06.2014**
(21) Application number: 13164296.9
(22) Date of filing: 18.04.2013
(51) Int. Cl.: H04B 3/54

(54) **Network access device with power line communication capability**

(30) Priority: 04.12.2012 TW 101223463 U
(71) Applicant: Compal Broadband Networks Inc., 114 Taipei City (TW)
(72) Inventor: Tseng, Shih-Ting, 221 New Taipei City (TW)
(74) Representative: Becker Kurig Straus

(57) **Abstract**

A network access device with a power line communication capability, including a power line terminal, for coupling to a power line; a power conversion circuit, coupled to the power line terminal, for converting an external power transferred via the power line to generate a system power; a network access circuit, coupled to an internet network terminal and the power conversion circuit, utilizing the system power to operate, for accessing a signal of the internet network terminal to generate a network signal; and a power line communication circuit, coupled to the power conversion circuit, the power line terminal and the network access circuit, utilizing the system power to operate, for converting the network signal to transfer to the power line via the power line terminal.

## Description

### Field of the Invention

The invention relates to a network access device, and especially relates to a network access device with a power line communication capability and capable of simplifying wiring and saving costs.

### Background of the Invention

With the popularization of the internet, people may easily and quickly exchange all kinds of information and messages to share knowledge through the internet. If an ordinary user wishes to link with the external internet, the user is required to first link to a network service system provided by a network service provider via a network access device (commonly known as a modem), so as to link with the internet. According to the system provided by the network service provider, a corresponding network access device is required to link and access with the system, such as a telephone modem for a telephone system or a cable modem for a cable system.

On the other hand, as to an internal network link of a residence, since power lines are widely used and have high distribution coverage, if the internet may be connected to every corner inside the residence by utilizing the existing power lines (i.e. users may easily access the internet via the sockets of the power lines), the great consuming of re-laying network lines may be saved and the problems of crossing floors and shielding by walls if wireless communication is applied may be avoided. Thus, the conventional technology has been developed and ruled a technology standard of power line communication (PLC), such as the standard of HomePlug 1.0.

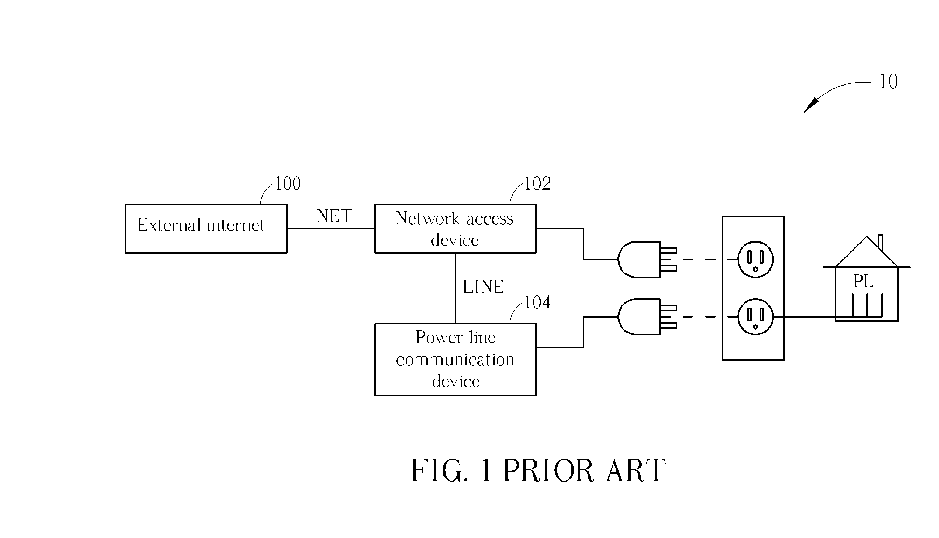

Please refer to FIG. 1, which illustrates a schematic diagram of a conventional user network system 10. As shown in FIG. 1, in the user network system 10, a network access device 102 may access an external internet 100 by an internet transmission line NET, and a power line communication device 104 has a power line communication functionality. The user network system 10 utilizes the network access device 102 to access the external internet 100 to generate network signals, and the network access device 102 is connected with the power line communication device 104 by a network line LINE to transfer the network signals. Then, the network signals are modulated to be transferred to a power line PL by the power line communication functionality of the power line communication device 104, and the network may be connected to any location inside a residence through the power line PL.

However, since the conventional user network system 10 requires to utilize the two devices (the network access device 102 and the power line communication device 104), two power plugs and sockets are required to be respectively connected to the network access device 102 and the power line communication device 104 for providing power for the network access device 102 and the power line communication device 104. Additionally, the network line LINE is required to be connected between the network access device 102 and the power line communication device 104 for transferring the network signals. Thus, the conventional user network system 10 may cause the wiring complexity and occupies two power sockets.

Therefore, it is necessary to provide a new device to simplify the wiring and reduce the using number of the power sockets.

### Summary of the Invention

This in mind, the present invention aims at providing a network access device with a power line communication capability and capable of simplifying wiring and saving costs.

This is achieved by a network access device according to claims 1. The dependent claims pertain to corresponding further developments and improvements.

As will be seen more clearly from the detailed description following below, the claimed network access device, with a power line communication capability, includes a power line terminal for coupling to a power line; a power conversion circuit, coupled to the power line terminal, for converting an external power transferred via the power line to generate a system power; a network access circuit, coupled to an internet network terminal and the power conversion circuit, utilizing the system power to operate for accessing a signal of the internet network terminal to generate a network signal; and a power line communication circuit, coupled to the power conversion circuit, the power line terminal and the network access circuit, utilizing the system power to operate, for converting the network signal to transfer to the power line via the power line terminal.

### Brief Description of the Drawings

FIG. 1 illustrates a schematic diagram of a conventional user network system.
FIG. 2 illustrates a schematic diagram of a user network system according to an embodiment of the present invention.
FIG. 3 illustrates a schematic diagram of a network access device according to an embodiment of the present invention.

### Detailed Description

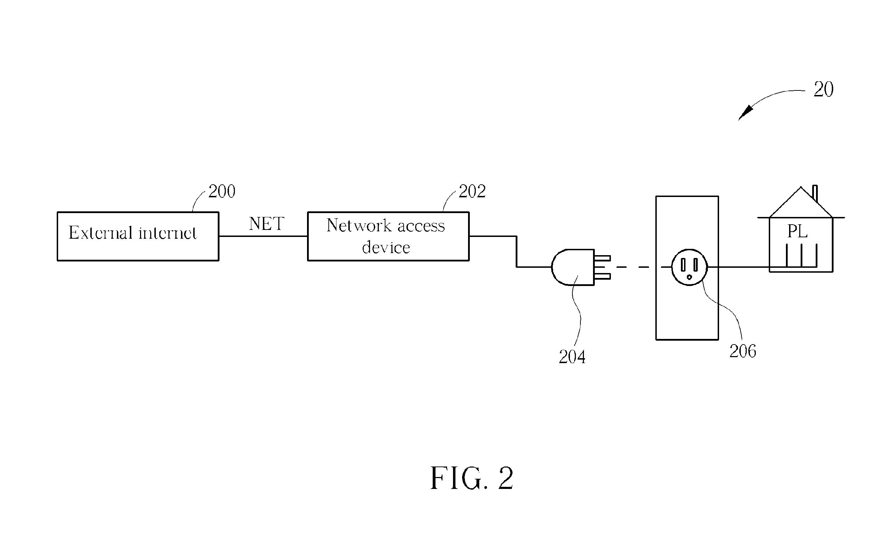

Please refer to FIG. 2, which illustrates a schematic diagram of a user network system 20 according to an embodiment of the present invention. In the user network system 20, a user may only utilize a network access device 202 to access an external internet 200 and perform power line communication. In other words, the user network system 20 only utilizes a power plug and a power socket for connecting with a power line to convert required operating power and transfer power line communication signals, so as to reduce the use of the power sockets. Moreover, since only a power conversion circuit in the network access device 202 is required for providing the operating power, power consumption may be reduced and circuit costs may be saved.

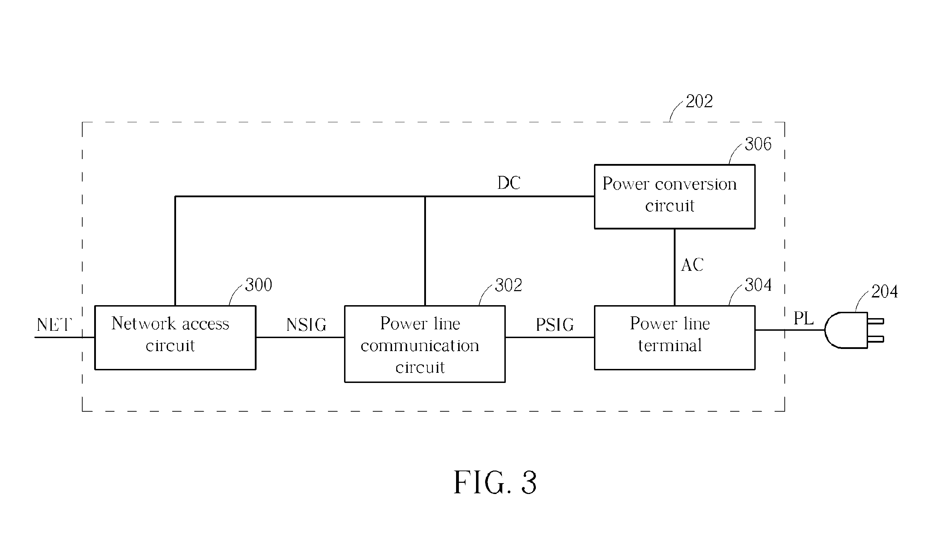

In detail, please refer to FIG. 3, which illustrates a schematic diagram of detail function blocks of the network access device 202 according to an embodiment of the present invention. As shown in FIG. 2 and FIG. 3, the network access device 202 may access signals of the external internet 200 through an internet transmission line NET and converts the signals to network signals. Then, the network signals are modulated as the power line communication signals to be transferred to a power line PL by utilizing a plug 204 and a socket 206, so as to connect network to any location inside a residence.

The network access device 202 includes a network access circuit 300, a power line communication circuit 302, a power line terminal 304, and a power conversion circuit 306. The power line terminal 304 may be connected to the power line PL through the power plug 204 and the power socket 206. The power conversion circuit 306 is coupled to the power line terminal 304 for converting an alternating current power AC transferred via the power line PL to a direct current power DC, and provides operating power for the network access circuit 300 and the power line communication circuit 302. The power conversion circuit 306 may be implemented by a full bridge regulator circuit or a push pull regulator circuit.

The network access circuit 300 accesses the external internet 200 and generates a network signal NSIG via the internet transmission line NET, and has different corresponding access circuits according to different network service systems. For example, a commonly-seen access circuit of an asymmetric digital subscriber line (ADSL) system (i.e. a circuit of ADSL modem) converts the signals of ADSL system to the network signal NSIG for linking with a computer device.

The power line communication circuit 302 may modulate the network signal NSIG as a power line communication signal PSIG, which is adapted to be transmitted on the power line, and transfer the power line communication signal PSIG to the power line PL via the power line terminal 304. Besides, the power line communication circuit 302 may conform with a power line communication protocol of HomePlug 1.0 or other power line communication protocols.

In short, since the network access circuit 300 has the functionality of accessing the external internet 200, and the power line communication circuit 302 has the functionality of power line communication, the network access device 202 of the present invention may access the external internet signals to convert and modulate the external internet signals as the power line communication signals, to transfer the power line communication signals to the power line PL, so as to form the internal local network inside the residence. Thereby, since the network access device 202 only requires a plug and a socket for connecting with the power line to convert the required operating power and transmit the power line communication signals, the use of the power sockets may be reduced. Moreover, the network access device 202 utilizes only one power conversion circuit for providing the operating power, and the power consumption may be reduced and the circuit costs may be saved.

Noticeably, the present invention integrates the network access circuit and the power line communication circuit as the network access device with the power line communication functionality. Besides, types and implementing methods of the network access circuit and the power line communication circuit are not limited. Any circuits capable of performing the signal processing for accessing the internet are all adapted to the network access circuit of the present invention. In addition to the above ADSL system access circuit, the network access circuit may also be any form of ADSL system access circuit (x digital subscriber line, xDSL), a cable system access circuit, or a fiber to the x (FTTx) system access circuit, etc. Moreover, the related circuits capable of implementing the signal processing and modulating for the power line communication are also adapted to the power line communication circuit of the present invention. In addition to the above processing circuit according to the power line communication protocol of HomePlug 1.0, the power line communication circuit may be the processing circuit according to a power line communication protocol of HomePlug AV, and is not limited.

In summary, since the prior art requires the network access device to access the external internet and requires the power line communication device to perform power line communication and form the power line network, the prior art may cause the wiring complexity and occupy the two power sockets. In comparison, the network access device provided by the present invention has the functionalities of accessing the internet and the power line communication. Thus, the wiring may be simplified, only one socket is required, and the power conversion circuit may be shared, so as to save the power consumption and costs.

## Claims

1. A network access device (202), with a power line communication capability, **characterized by** comprising:
a power line terminal (304), for coupling to a power line;
a power conversion circuit (306), coupled to the power line terminal (304), for converting an external power transferred via the power line to generate a system power;
a network access circuit (300), coupled to an internet network terminal (200) and the power conversion circuit (306), utilizing the system power to operate, for accessing a signal of the internet network terminal (200) to generate a network signal; and
a power line communication circuit (302), coupled to the power conversion circuit (306), the power line terminal (304) and the network access circuit (300), utilizing the system power to operate, for converting the network signal to transfer to the power line via the power line terminal (304).

2. The network access device (202) of claim 1, **characterized in that** the external power is an alternating current power.

3. The network access device (202) of claim 1, **characterized in that** the system power is a direct current power.

4. The network access device (202) of claim 1, **characterized in that** the network access circuit (300) is an x digital subscriber line (xDSL) system access circuit.

5. The network access device (202) of claim 4, **characterized in that** the x digital subscriber line (xDSL) system is an asymmetric digital subscriber line (ADSL) system.

6. The network access device (202) of claim 1, **characterized in that** the network access circuit (300) is a cable system access circuit.

7. The network access device (202) of claim 1, **characterized in that** the network access circuit (300) is a fiber to the x (FTTx) system access circuit.

8. The network access device (202) of claim 1, **characterized in that** the power line communication circuit (302) converts the network signal according to a power line communication protocol of HomePlug 1.0 to transfer to the power line via the power line terminal (304).

9. The network access device (202) of claim 1, **characterized in that** the power line communication circuit (302) converts the network signal according to a power line communication protocol of HomePlug AV to transfer to the power line via the power line terminal (304).
